# FASCICULE DE BREVET EUROPEEN

(11) **EP 3 274 138 B1**
(45) Date de publication et mention de la délivrance du brevet: **19.06.2019**
(21) Numéro de dépôt: 16714803.0
(22) Date de dépôt: 23.03.2016
(51) Int. Cl.: B25J 21/02

(54) **DISPOSITIF BIDIRECTIONNEL DE CHANGEMENT D'UN GANT DE MANIPULATION ET PROCEDE DE REMPLACEMENT DE CE GANT PAR TRANSLATION**
BIDIREKTIONALE VORRICHTUNG ZUM WECHSELN EINES HANDHABUNGSHANDSCHUHS UND VERFAHREN ZUM ERSETZEN DES HANDSCHUHS DURCH TRANSLATION
BIDIRECTIONAL DEVICE FOR CHANGING A HANDLING GLOVE AND METHOD FOR REPLACING SAID GLOVE BY TRANSLATION

(30) Priorité: 26.03.2015 FR 1552557
(43) Date de publication de la demande: 31.01.2018
(73) Titulaire: Piercan, 14520 Port en Bessin (FR)
(72) Inventeur: ARETHUSE, Franck, 72000 Le Mans (FR)
(74) Mandataire: Brevalex
(86) Numéro de dépôt international: PCT/EP2016/056446
(87) Numéro de publication internationale: WO 2016/151045

(56) Documents cités:
- EP-A1- 1 967 335
- FR-A1- 2 409 828
- US-A1- 2002 189 007

## Description

La présente invention concerne l'interchangeabilité de gants de manipulation avec ou sans bourrelet, sous continuité de confinement de façon étanche dans les domaines industriels suivants : pharmacie, animalier, chimique, etc. Plus précisément, l'invention concerne un dispositif bidirectionnel de changement d'un gant de manipulation de l'intérieur vers l'extérieur d'une boite à gant ou de l'extérieur vers l'intérieur de la boîte à gant appelée également : enceinte de confinement ou isolateur. Ledit dispositif étant destiné à remplacer un gant usagé par un gant neuf, comportant une manchette raccordée de façon étanche à un manchon de manchette et un gant en un matériau souple raccordé de façon étanche à un manchon de gant. L'ensemble ainsi formé est nommé rond de poignet.

L'invention concerne également un procédé de remplacement d'un gant usagé par un gant neuf au moyen du dispositif selon la présente invention.

La manipulation de produits toxiques, les produits chimiques très volatiles s'effectue de manière courante dans des milieux confinés. Les milieux confinés sont également utilisés pour protéger les éléments de la pollution extérieure, lorsque l'on recherche une manipulation en milieu stérile, par exemple dans le cas de l'industrie pharmaceutique pour les conditionnements des médicaments injectables, l'élevage des animaux de laboratoire sous asepsie, les anticancéreux manipulés dans les pharmacies des hôpitaux, l'agroalimentaire, etc.

Ces milieux confinés comportent une enceinte étanche. Afin de pouvoir réaliser des manipulations de l'extérieur de l'enceinte, celle-ci comporte des ouvertures auxquelles sont fixés des gants. Ainsi, une personne introduisant une main dans un gant, peut manipuler les objets contenus dans l'enceinte sans risque de les polluer et sans risque d'être contaminée.

Ces gants sont montés sur l'enceinte de plusieurs façons, par exemple par l'intermédiaire de bagues solidaires de l'enceinte, appelées rond d'épaule pour les gants fixés par collier ou bague d'enceinte pour les gants montés sur une bague support interchangeable par un mécanisme d'éjection, appelé canon d'éjection, remplaçant par poussée la bague du gant usagé par une bague de gant neuf.

Les ronds d'épaule sont utilisés aussi bien pour les cellules en dépression que pour les cellules en surpression. Les rond d'épaule englobent la main, le bras de l'opérateur jusqu'à l'épaule.

Les systèmes sur bague éjectables ne sont utilisés à ce jour que pour les cellules en dépression du fait que le mécanisme d'éjection est important, par son volume et par son poids et qu'il ne peut être utilisé de l'intérieur du confinement.

Particulièrement dans les domaines animalier et pharmaceutique en confinement stérile, le gant en une seule longueur est scindé en deux éléments, à savoir une partie haute, plus résistante, appelée manchette. Celle-ci se raccorde au niveau de l'enceinte sur un rond d'épaule pouvant être circulaire ou ovale et de taille importante pour offrir plus de débattement à l'opérateur. Par ailleurs, le gant est scindé en une partie basse qui se raccorde sur un manchon au niveau du poignet et permet le montage d'un gant approprié à chaque manipulation. Ce gant peut être changé par un gant neuf depuis l'intérieur du confinement à l'aide de l'autre main. Toutefois, le procédé de changement est très délicat. Cette méthode est recevable au niveau d'un laboratoire de recherche mais certainement pas dans un milieu industriel et les pharmacies des hôpitaux.

Il est connu du document FR 2 913 362 un dispositif selon le préambule de la revendication 1 et une méthode pour changer un gant monté préalablement sur une bague de gant venant se loger dans la bague de manchette fixée à son extrémité.

L'interchangeabilité du gant usagé s'obtient par l'acheminement à l'intérieur du confinement d'un gant neuf stérile. Ce gant est monté dans un outillage appelé « support ». De l'intérieur de la manchette on apporte un deuxième outillage appelé « poussoir ». On engage le gant sur la bague de manchette et du côté intérieur de l'isolateur, on présente le support contenant le gant neuf fixé sur sa bague pour l'engager sur la bague du gant usagé. Le glissement de la bague de manchette depuis la bague du gant usagé jusque sur la bague du gant neuf s'opère en poussant le poussoir en réaction du support.

Cette méthode nécessite une dextérité de l'opérateur et reste complexe.

Les outillages spécifiques, poussoir et support, permettent de recevoir dans des cavités pour l'un le gant usagé et pour l'autre le gant neuf sans risque de pincement, d'où des outillages d'encombrement non négligeable en cellule, particulièrement pour le poussoir.

Le principe retenu des bagues de gant pour permettre l'interchangeabilité sont à deux étages. Chaque bague est constituée d'un premier manchon dont le diamètre inférieur vient se loger à l'intérieur de la bague de manchette et d'un deuxième manchon de diamètre inférieur au diamètre du premier manchon permettant le montage du gant et sa fixation par un collier à deux têtes diamétralement opposées. Le diamètre des têtes doit être inférieur au diamètre intérieur du premier manchon afin de permettre la pénétration de l'un dans l'autre nécessaire au principe d'interchangeabilité retenu.

Les inconvénients majeurs de ce principe sont une diminution de la dextérité de l'opérateur du fait de l'épaississement de la bague de gant constituée de deux manchons et de l'augmentation de sa longueur engendrée par leur superposition. La conséquence de cet état de fait est d'augmenter le poids et l'encombrement du gant au niveau du poignet de l'opérateur, ce qui diminue d'autant sa dextérité et augmente d'autant sa fatigue.

L'arrêt axial de la bague de gant dans la bague manchette est obtenu à l'aide de points durs. Dans le cas des moyens d'étanchéité décrits précédemment, l'effort d'interchangeabilité devient continu et fait donc perdre à l'opérateur le ressenti du passage des points durs des moyens d'encliquetage servant d'indicateurs de fin de fixation. Par suite, l'opérateur n'est pas assuré d'avoir terminé le transfert du gant sur la bague de la manchette. Il risque de retirer le poussoir avec le gant usagé avant la mise en place du gant neuf sur la bague.

Les inconvénients secondaires de ce principe sont les suivants :
- la mise en place du premier gant nécessite un masque ou un outillage adéquat ;
- le couvercle de forme tronconique nécessite l'augmentation de la course du piston du support d'une valeur égale à la hauteur du couvercle, ce qui a pour conséquence d'augmenter l'encombrement et le poids des outillages ;
- l'orientation du gant peut être erronée. En effet, le gant peut être placé pouce en haut, ce qui est la position correcte ou pouce en bas ce qui est une position incorrecte. Il n'y a pas de détrompeur permettant d'assurer à coup sûr la position du pouce correcte vers le haut.

La présente invention a par conséquent pour but de proposer un dispositif de changement de gant sur manchette remédiant aux inconvénients énumérés ci-dessus et offrant une grande sûreté et facilité de fonctionnement pour les opérateurs vis-à-vis du confinement.

### EXPOSE DE L'INVENTION

Un premier objet de l'invention est un dispositif de changement d'un gant de manipulation de l'intérieur vers l'extérieur d'une boite à gant et de l'extérieur vers l'intérieur sous confinement, ledit dispositif étant destiné à remplacer un gant usagé par un gant neuf, comportant une manchette raccordée de façon étanche à un rond d'épaule monté de façon étanche sur la paroi d'une enceinte de confinement raccordée de façon étanche à un manchon de manchette, et un gant en un matériau souple raccordé de façon étanche à un manchons de gant.

À cet effet, la présente invention propose un dispositif selon la revendication 1.

Selon l'invention, le manchon de gant comporte extérieurement un nombre déterminant de plots clipsables situés sur les secteurs flexibles et le manchon de manchette dont la surface interne est cylindrique sans obstacle, comporte intérieurement un même nombre de rampes axiales pour guider les plots clipsables dans les cavités d'ancrage, verrouillant le manchon de gant dans le manchon de manchette, formant, une fois assemblés, un tout étanche appelé rond de poignet.

Les plots clipsables du manchon de gant s'engagent dans les rainures axiales du manchon de manchette. Les plots montés sur des secteurs flexibles viennent se clipser dans des petites cavités verrouillant le manchon de gant dans le manchon de manchette, afin que le tout étanche forme un rond de poignet indissociable.

L'interchangeabilité du gant ne nécessite aucun outillage.

L'interchangeabilité par un nouveau gant s'effectue en introduisant les plots du corps du manchon de gant dans les entrées périphériques des rainures axiales du manchon de manchette et de façon synchronisée, des tenons d'effacement viennent effacer les plots du manchon de gant à changer, les libérant du manchon de manchette grâce à une poussée dans le sens de la translation. Le nouveau manchon de gant vient se clipser et verrouiller sur le manchon de manchette tout en libérant l'ancien manchon de gant.

Une étanchéité statique et dynamique, lors de l'interchangeabilité, est avantageusement constituée au minimum par un joint d'étanchéité à une ou deux lèvres, soit injecté soit encastré de façon étanche dans la gorge du manchon de gant prévue sur le corps du manchon de gant, afin d'assurer une étanchéité permanente entre le manchon de manchette et le manchon de gant.

Cette étanchéité est maintenue constamment lors du changement du manchon de gant.

La glissance de l'élastomère du joint entre la bague manchette et la bague gant est améliorée par une ionisation de surface ce qui présente l'avantage de durcir l'élastomère uniquement en surface et de diminuer le coefficient de frottement, d'augmenter sa durabilité et sa résistance aux produits de stérilisation. Le bombardement de l'élastomère lors de l'ionisation de surface avec des ions Argent rend la surface active à la neutralisation des bactéries, ce qui apporte deux avantages très importants : la glissance et une action antibactérienne, le mouvement combiné de translation /rotation du manchon de gant contre la paroi interne du corps du manchon de manchette est donc accompli sans effort et renforce l'intégrité du changement de gant par son action antibactérienne.

De préférence, le dispositif de changement de gant comporte un joint d'étanchéité à une ou deux lèvres en élastomère a subi une ionisation de surface permettant augmenter ses propriétés de glissance facilitant la mise en place d'une nouvelle bague et l'éjection de l'ancienne.

Il comporte des ergots clipsables (49) et des tenons d'effacement des plots (47) munis d'un système visuel et mécanique de détrompage, de façon à ce que le gant soit toujours mis dans la bonne position de travail.

Le dispositif de changement de gant ne nécessite aucun outil spécifique pour effectuer la manipulation d'interchangeabilité par l'opératrice ou par l'opérateur, des repères visuels sont utilisées pour faciliter la présentation lors des actions d'interchangeabilité s'effectuant par une simple translation.

De préférence, le dispositif de changement de gant comporte un système de verrouillage composé de plots clipsables introduits dans des cavités appropriées. Ces plots clipsables peuvent être déclipsés que lorsque des tenons d'effacement s'introduisent dans des logements des secteurs flexibles pour effacer vers l'intérieur du manchon de gant, cette action se traduisant par le déclipsage de ces plots clipsables.

De préférence, le dispositif de changement de gant comporte un manchon de gant composé d'un corps de manchon de gant comportant les dispositifs de guidage et de verrouillage de ce corps de manchon de gant dans le corps du manchon de manchette. Il comporte une bague d'assemblage de gant du gant dans le corps du manchon du gant, le maintien étant assuré par la bague d'assemblage de gant dans le corps du manchon de gant.

L'étanchéité entre le corps du manchon de gant et la bague d'assemblage de gant est assurée par le pressage de l'élastomère du gant.

De préférence, le dispositif de changement de gant est composé du corps de manchon de manchette et d'une bague d'assemblage de manchette. La bague d'assemblage venant presser la manchette contre le redent du corps de manchon de manchette, assurant ainsi l'étanchéité du manchon de manchette, le tout étant maintenu par un assemblage mécanique les rendant indissociables.

Un autre objet principal de l'invention est un procédé de remplacement d'un gant usagé par un gant neuf au moyen d'un dispositif tel que décrit précédemment.

À cet effet, la présente invention propose un procédé selon la revendication indépendante 9.

En d'autres termes, ce procédé comprend les phases suivantes :
- on place un gant neuf équipé de son manchon de gant à l'intérieur de l'enceinte de confinement ;
- on solidarise les deux bagues d'assemblage de manchon de manchette et d'assemblage de gant en les emboitant ;
- on pousse le manchon de gant neuf dans le manchon de gant usagé sur le manchon de manchette jusqu'au verrouillage du manchon neuf dans les rampes axiales du corps du manchon de manchette jusqu'au repère visuel prévu et écoute d'un « clic » de verrouillage et dégagement complet du manchon de gant usagé dans l'intérieur de la manchette.

Sur la tranche du corps du manchon de gant usagé, au minimum trois créneaux femelles sont prévus pour recevoir les trois créneaux mâles d'entrainement du manchon gant neuf dans la position correcte, à savoir pouce vers le haut. Trois logements sont aussi prévus dans les secteurs flexibles recevant les tenons du nouveau manchon de gant pour déclipser les plots du manchon de gant usagé.

L'interchangeabilité ne nécessite aucun outillage dans le cas d'un poste de travail à deux gants. Il suffit de prendre le manchon du gant neuf par l'autre main à travers le gant, de le présenter sur le rond de poignet suivant les repères prévus sur les manchons de manchette et de gant, d'engager les plots dans les rainures axiales en maintenant les faces des manchons de gant l'une contre l'autre et de pousser. Le manchon de gant usagé s'évacue au fur et à mesure de la translation, le manchon de gant neuf se clipse et le manchon de gant usagé tombe dans l'intérieur de la manchette.

De préférence la sécurité en fin de cycle immobilise en rotation le manchon du gant neuf vis-à-vis du manchon de manchette, elle est assurée par un encliquetage des plots dans des cavités prévues à cet effet, interdisant tout mouvement au radial et axial. L'opérateur est assuré du bon verrouillage du manchon de gant par un signal auditif « clic » et un indicateur de positionnement visuel. Ces deux signaux prouvent que le gant est bien verrouillé et en bonne position.

Avantageusement, le joint d'étanchéité en élastomère contient un agent décontaminant qui neutralise les éventuelles bactéries pouvant provenir par l'intérieur de la manchette, avantageusement le joint d'étanchéité de par sa configuration apportera l'étanchéité de la connexion.

Selon le procédé de remplacement d'un gant usagé par un gant neuf au moyen d'un dispositif selon l'invention :
- dans le cas de l'utilisation du système en dépression, on retrousse alors la manchette vers l'extérieur de la cellule, alors que dans le cas de l'utilisation du système en surpression, on retrousse le gant usagé vers l'extériur de la manchette ;
- dans le cas de dépression, on retrousse le gant neuf vers l'intérieur de son manchon ;
on place un gant neuf équipé de son manchon de gant à l'intérieur de la cellule de confinement (Isolateur) en cas de surpression et à l'extérieur en cas de dépression ;
- dans les deux cas, surpression et dépression, on présente le nouveau manchon de gant sur le manchon de gant usagé en place dans le corps du manchon de manchette. Les pentes à l'entrée des logempents permettent le pré-centrage des tenons ;
- on pousse le nouveau manchon de gant sur l'ancien manchon de gant, ce qui a pour effet d'engager les créneaux mâles dans les créneaux femelles de l'ancien manchon de gant et dans le même mouvement d'engager les tenons d'effacement dans les logements de l'ancien manchon de gant. Ceci a pour effet d'effacer les plots clipsables vers l'intérieur du précédent manchon de gant ;
- on pousse le bloc des deux manchons de gant en translation dans le corps du manchon de manchette, réalisant ainsi le verrouillage du manchon de gant neuf dans le corps du manchon de manchette, sous l'effet des plots clipsables dans les rampes axiales du corps du manchon de manchette, en alignement avec le repère de fin de verrouillage situé sur le corps du manchon de manchette, signalé par un « clic ».

Le manchon de gant usagé est dégagé dans l'intérieur de la manchette dans le cas de l'utilisation du système en surpression. Dans le cas d'utilisation du système en dépression, le manchon de gant usagé est dégagé à l'intérieur de la boîte à gants.

### BREVE DESCRIPTION DES DESSINS

D'autres caractéristiques et avantages de la présente invention apparaîtront encore à la lecture de la description qui suit d'un exemple de réalisation donné à titre illustratif en référence aux figures annexées. Sur ces figures :
- la figure 1 est une vue d'une boite à gant comportant un dispositif de changement d'un gant de manipulation conforme à la présente invention ;
- la figure 2 représente le montage du rond de poignet pour son utilisation en boîte à gant en surpression ;
- la figure 3 représente le montage du rond de poignet pour son utilisation en boîte à gant en dépression. On remarque pour ce faire il suffit de retourner le corps du manchon de manchon de manchette ainsi que le manchon de gant dont le montage du gant s'effectue de l'extérieur vers l'intérieur de la boîte à gant ;
- la figure 4a montre le manchon de gant seul ;
- la figure 4b montre le manchon de manchette seul ;
- la figure 4c montre l'ensemble devenant le rond de poignet composé du manchon de gant monté dans le manchon de manchette ;
- la figure 5 représente en vue extérieur l'ensemble comprenant : la manchette, le rond de poignet et le gant. On remarque le pouce du gant en position verticale haute en alignement avec le repère du manchon de manchette ;
- la figure 6 représente à une échelle agrandie une coupe de la figure 5, sur laquelle on peut voir en détail la composition du rond de poignet et en particulier le joint d'étanchéité assurant l'intégrité entre l'intérieur du manchon de manchette et l'extérieur du manchon de gant ;
- la figure 7 représente le corps du manchon de manchette faisant apparaitre les entrées et les rainures axiales recevant les plots clipsables et de verrouillage ;
- la figure 8 représente la bague d'assemblage du manchon de manchette, celle-ci est emboîtée sur le corps du manchon de manchette, venant en appui sur la manchette le tout sur l'épaulement du corps du manchon de manchette assurant ainsi l'étanchéité et le maintien absolu de la manchette ;
- les figures 9 et 9a représentent le corps du manchon de gant faisant apparaitre les plots clipsables et de verrouillage, les secteurs flexibles supportant les plots clipsables et de verrouillage et les logements recevant les tenons d'effacement de ces plots clipsables et de verrouillage lors de l'interchangeabilité ainsi que les créneaux mâles et femelles d'entrainement en rotation ;
- la figure 10 représente la bague d'assemblage du manchon de gant, cette bague assemble le gant sur le corps du manchon de gant par soudure ultra-sons assurant ainsi l'étanchéité et le maintien absolu du gant.

### DESCRIPTION DETAILLEE DE L'INVENTION

Les repères suivis de la lettre « a » désignent les pièces montées pour un fonctionnement en surpression. Les repèrres suivis de la lettre « b » désignent les pièces montées pour un fonctionnement en dépression.

Les mêmes pièces permettent de faire un montage pour les cellules en surpression, ainsi que pour les cellules en dépression par inversion du corps du manchon de manchette 21a (montage en pression) ou 21b (montage en dépression) et le corps du manchon de gant 40a, 40b. Dans le cas du montage de la cellule en dépression, le gant 60b est retroussé sur sa bague d'assemblage 42a et 42b.

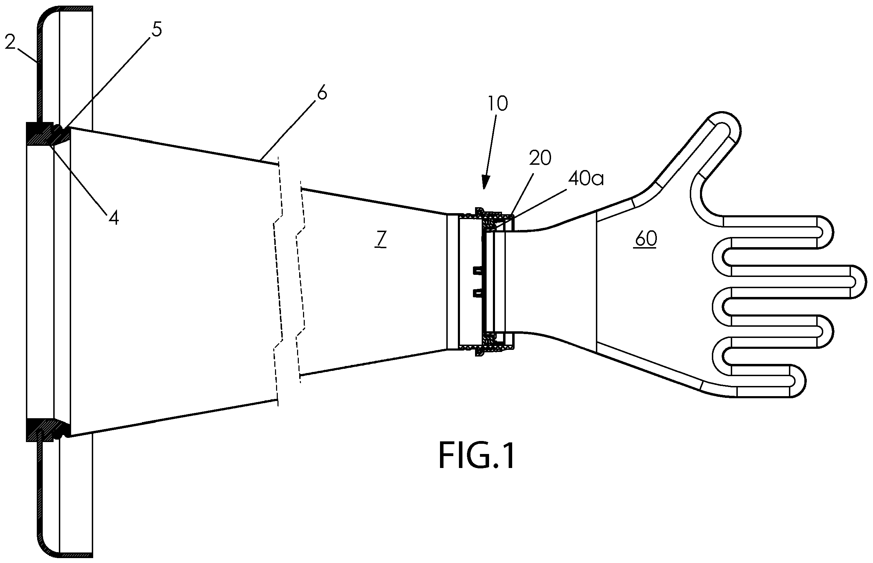

On a représenté sur la figure 1 un dispositif de changement d'un gant de manipulation en surpression. Ce dispositif est fixé sur un rond d'épaule 4 monté de façon étanche sur une paroi 2 d'une enceinte de confinement dans le cas présent, la manchette 6 est fixée sur le rond d'épaule par un collier 5. La manchette 6 peut être fixée sur le rond d'épaule par tout autre procédé approprié, par exemple par ancrage dans une cavité par injection de silicone, par pinçage de la peau de la manchette 6 par une pièce intermédiaire collée, par collage ou par soudure en fonction des matières en présence. A son extrémité opposée à celle fixée sur le rond de gant, la manchette 6 est fixée à un manchon de manchette 20 dans lequel est monté un manchon de gant 40a. Un gant 60a est fixé au manchon de gant 40a. L'ensemble formé par le manchon de manchette 20 et le manchon de gant 40a est appelé rond de poignet 10.

Le gant 60a est monté sur le manchon de gant 40a par tout procédé approprié, en particulier il peut être monté par ancrage et pinçage au moyen d'une bague d'assemblage dans le manchon de gant.

Le volume intérieur de la manchette 7 correspond à l'atmosphère extérieure de la boîte à gant.

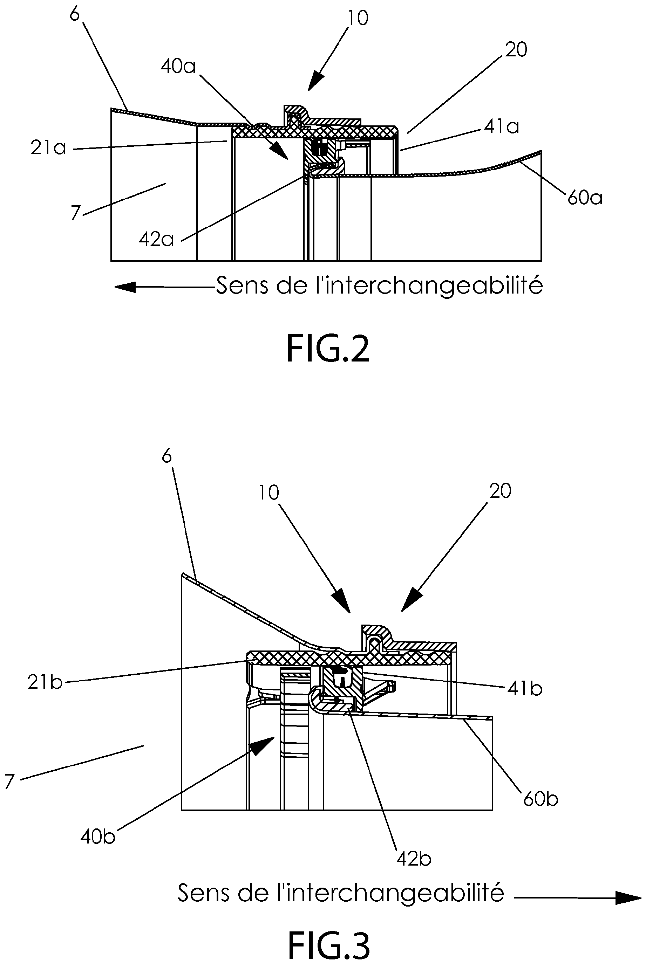

On a représenté sur la figure 2 le montage du rond de poignet permettant avec les mêmes pièces une interchangeabilité de l'intérieur vers l'extérieur, correspondant à une utilisation en boîte à gant en surpression, utilisée en particulier en pharmacie.

On a représenté sur la figure 3 le montage du rond de poignet permettant avec ces mêmes pièces d'effectuer une interchangeabilité sans outil particulier de l'extérieur vers l'intérieur correspondant à une utilisation en boîte à gant en dépression. Le corps du manchon de manchette 21 est inversé, la manchette 6 est fixée d'une façon identique à la figure 2. Le manchon de gant 40b est présenté par l'intérieur de la manchette ce qui impose de monter le gant 60b en le retournant sur sa bague d'assemblage 42b.

Ci-après, est considéré le cas d'une cellule en surpression (stérile). Le changement de gant s'effectue donc de l'intérieur de l'enceinte vers l'extérieur.

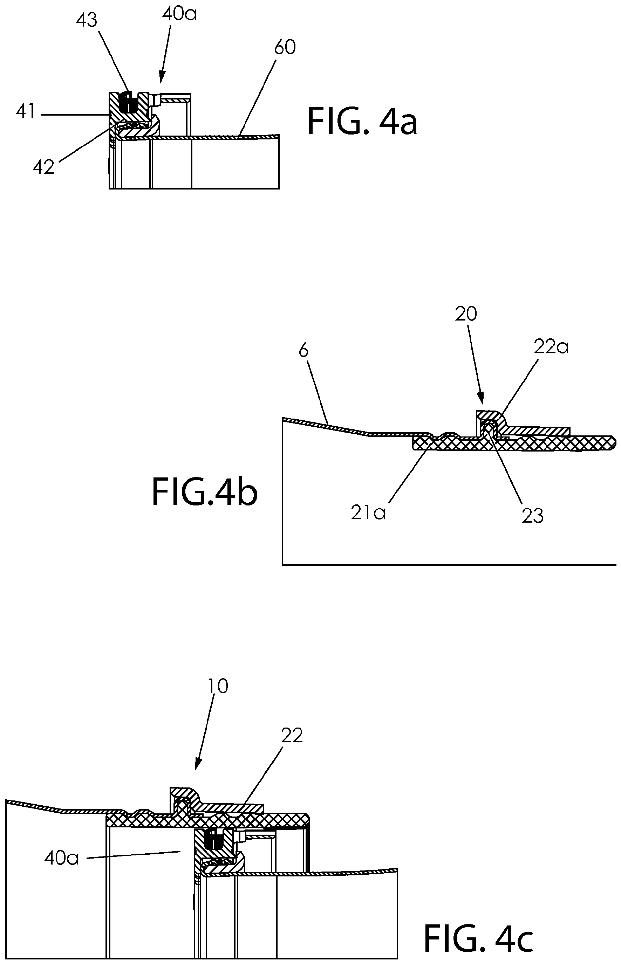

La figure 4a représente le manchon de gant 40a composé d'un corps de manchon de gant 41 sur lequel est monté dans une gorge un joint d'étanchéité 43. Un gant 60 est chaussé sur sa bague d'assemblage de gant 42b, l'ensemble est inséré dans le corps du manchon de gant 41 de façon étanche par pressage et collage ou soudage, le rendant indissociable de la bague d'assemblage de gant 42b formant ainsi le manchon de gant 40.
La figure 4b représente le manchon de manchette 20 composé d'un corps de manchon de manchette 21 sur lequel est monté par-dessus un redent 23 la manchette 6, la bague d'assemblage du manchon de manchette 22 est insérée sur le manchon de manchette 21 de façon identique à la bague d'assemblage de gant 42a.
La figure 4c représente le manchon de gant 40a mis place manuellement sans outil particulier dans le manchon de manchette 20a formant ainsi le rond de poignet 10.

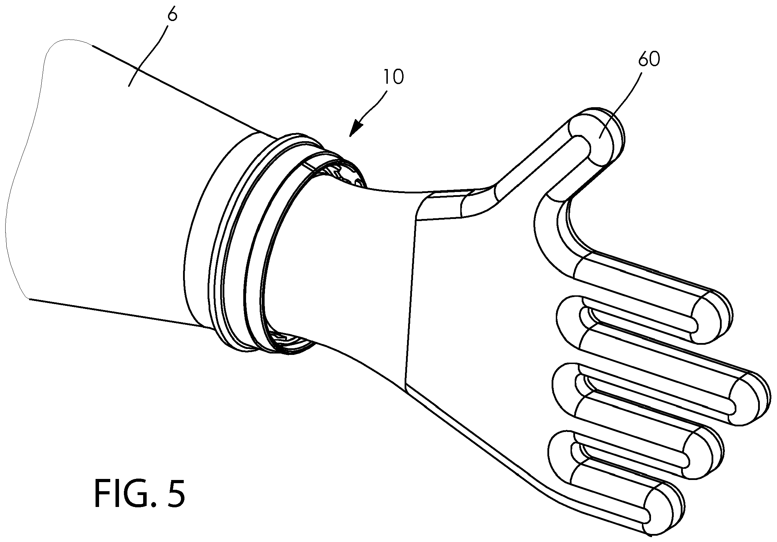

La figure 5 montre l'ensemble manchette rond de poignet 10 et gant 60 correctement monté, pouce dans la verticale dirigé vers le haut.

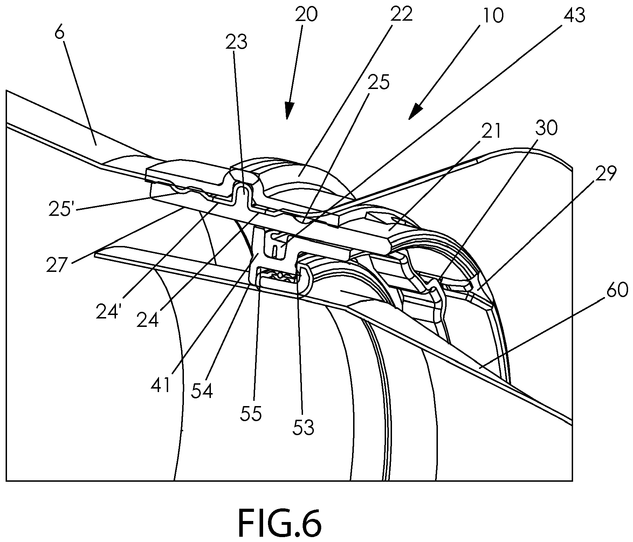

La figure 6 à une échelle agrandie permet de visualiser les détails du rond de poignet 10 avec le manchon de manchette 20 et du manchon de gant 40 et le volume qu'ils créent. Ce volume permet une bonne pénétration des gaz pour stériliser pleinement ce volume. Il assure une bonne décontamination des surfaces découvertes. En fonction des opérations à effectuer par exemple dans le domaine animalier la protection de ce volume s'impose pour éviter toute introduction nuisible à l'interchangeabilité du système. La figure 6 permet de mieux appréhender les figures suivantes.

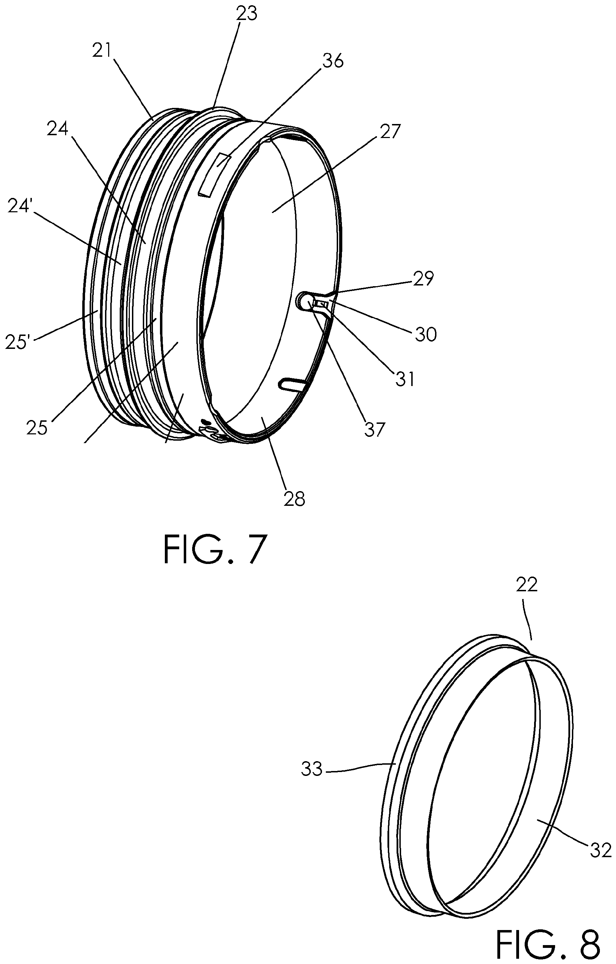

- La figure 7 représente seul le corps du manchon de manchette 21.

L'intérieur comporte un alésage de dégagement 28 dans lequel se trouvent au minimum trois entrées 29 de rampes 30 de préférence décalées à 120°. Celles-ci ne débouchent pas à l'extérieur du corps de manchon de manchette 21. Cet alésage de dégagement 28 est légèrement plus grand que l'alésage 27 afin d'éviter de blesser le joint d'étanchéité lors de son passage au niveau des rampes axiales 30 et permet une introduction plus aisée du manchon de gant 40 par l'opérateur. Sur ces rampes axiales 30 se trouve un ergot anti-délogement 31 de forme rectangulaire dans le sens circulaire suivi d'une cavité 37 terminant les rampes axiales 30, cela permet de clipser des plots clipsables 49 venant se loger dans les cavités 37. La fonction de l'ergot anti-retour 31 est d'empêcher le délogement lors de son passage dans la rainure 58. Les fonctions du repère visuel 37 sont de maintenir en position verrouillée le corps du manchon de gant 41 sur le corps du manchon de manchette 21 et d'engendrer la résonance d'un « clic » auprès de l'opérateur, confirmant le verrouillage. En outre des repères visuels sont situés l'un 36 sur le corps du manchon de manchette 21, l'autre situé sur le corps du manchon de gant 41, lui confirme cette position par leur alignement. Les ergots antiretour 31 font donc office d'antiretour immobilisant tout mouvement axial et radial entre le manchon de manchette 20 et le manchon de gant 40.

Un repère d'engagement permet à l'opérateur visuellement de présenter le manchon de gant 40 sur le manchon de manchette 21 lui facilitant son engagement dans l'alésage de dégagement 28. L'alésage 27 reçoit le joint d'étanchéité 43 et assure une continuité de l'étanchéité dynamique pendant toute la phase d'interchangeabilité puis statique.

L'extérieur de corps du manchon de manchette 21 comprend un premier épaulement, sur lequel on retrouve les repères visuels 36 et d'engagement, et qui comporte après ces repères une gorge 25 permettant de recevoir le dépôt de colle ou l'écoulement de matière dans le cas d'un assemblage par soudure. Celle-ci est suivie par une deuxième gorge dite d'extrémité de manchette 24 évitant un montage complexe de la manchette 6 sur son corps de manchon 21. Ce logement et suivi d'un épaulement appelé redent 23 de maintien de manchette. Enfin, en arrière de ce redent 23 sur son extérieur de la virole 26, on trouve la symétrie des gorges 24 et 25 avec une gorge d'extrémité de manchette 24' et avec une gorge 25'permettant l'utilisation du système dans le cas d'une boîte à gant en dépression.

La figure 8 représente seule la bague d'assemblage du manchon de manchette 22 sur le corps du manchon de manchette 21, l'alésage intérieur de centrage 32 assure le centrage sur le corps du manchon de manchette 21. L'épaulement 33 vient contre le redent 23 permettant le maintien par pression de la manchette pendant la prise du collage ou de la soudure. En outre, cet épaulement 33 a une deuxième fonction très importante, celle de protéger la manchette 6 contre les chocs se traduisant par l'augmentation de sa durée de vie.

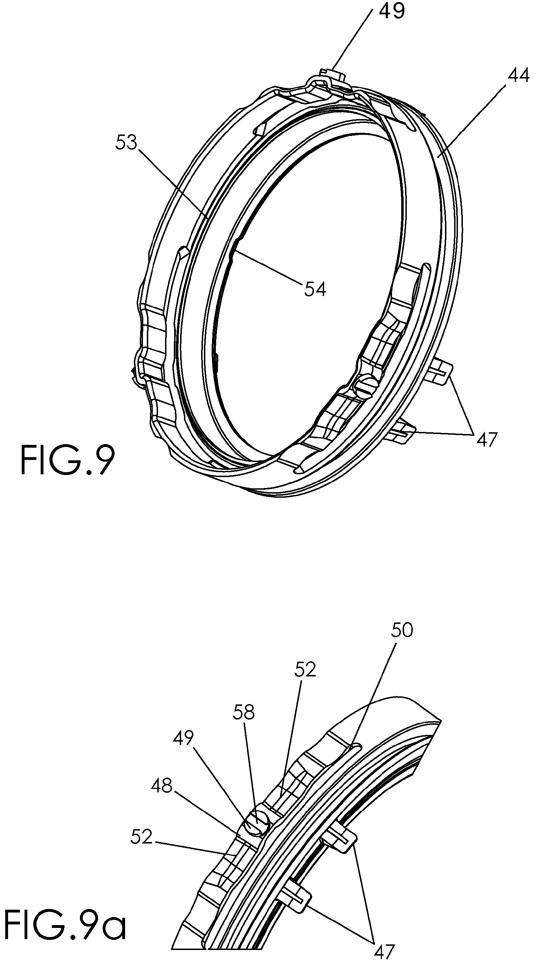

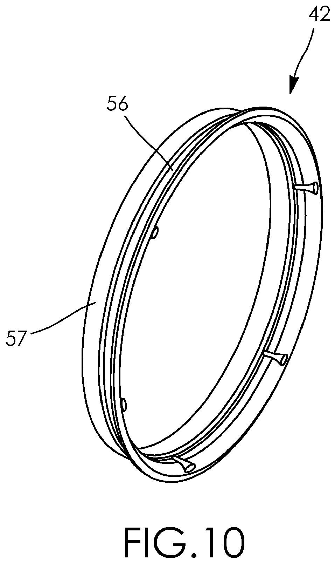

La figure 9 représente seul le corps du manchon de gant 41. Cette pièce en forme de virole assure les fonctions suivantes :
- de déclipsage par les trois tenons d'effacement des plots 47 situés à l'arrière du corps du manchon de gant 41, lors de leur engagement dans les trois paires de logement 52 ;
- d'entrainement en translation par les tenons d'effacement des plots 47 du manchon du gant 41 neuf situés également à l'arrière du corps de manchon de gant 41, afin de translater le manchon du gant 41 usagé ;
- de clipsage par trois plots clipsables 49 situés sur les trois secteurs flexibles 48 à l'avant du corps du manchon de gant 41;
- de réception des tenons d'effacement des plots du nouveau manchon du gant neuf par les trois logements 52, dont la pénétration progressive lors de sa mise en place de ce nouveau manchon de gant neuf par l'opérateur a pour effet que les tenons 47 effacent radialement vers l'intérieur du corps de manchon de gant les plots clipsables grâce à la déformation des secteurs flexibles 48. Cette flexibilité est rendue possible par les trois lumières débouchantes 50 ;
- d'étanchéité entre l'extérieur du manchon de gant 41 et l'intérieur du corps de manchon de manchette 21. Pour ce faire, une gorge 44 permet la réception du joint d'étanchéité 43 du type à une lèvre dans l'exemple représenté, mais il peut être torique, doubles lèvres, quadrilobe, etc. Ce joint d'étanchéité 43 doit être constitué dans une matière alimentaire, caoutchouc etc. (voir figure 6). L'étanchéité est assurée par la compression de la lèvre du joint d'étanchéité 43 contre la paroi interne lisse de l'alésage 27 du corps du manchon de manchette 21. La glissance de l'élastomère est obtenue par une ionisation de surface qui présente l'avantage de durcir l'élastomère en surface et d'augmenter la glissance en diminuant le coefficient de frottement. L'ionisation peut être effectuée avec des ions Argent auto-bactéricide, ce qui permet de garder stérile la partie du joint 43 en contact avec l'intérieur du corps du manchon de manchette 21 ;
- de présentation visuelle du manchon de gant 40 sur le manchon de manchette, grâce à un repère visuel sur l'extérieur de la partie cylindrique du corps du manchon 41 et sur la tranche avant ;
- de l'étanchéité du gant monté sur sa bague d'assemblage 42 (voir figure 10) venant s'appuyer sur l'épaulement intérieur 53 du corps du manchon de gant 41;
- de maintien indissociable du gant au corps de manchon de gant 41 et la virole de centrage 57 de la bague d'assemblage de gant 42.

La figure 9a, pour une meilleure compréhension, représente un détail agrandi d'un secteur flexible 48 avec son plot clipsable 49, son logement de réception 52 des tenons d'effacement 47, et la rainure 58 et la lumière 50A.

La figure 10 seul la bague d'assemblage de gant 42 constituée d'une collerette 56 recevant le gant 60 et permettant son appui sur l'épaulement intérieur 53 du corps de manchon de gant 41. Cette collerette se termine par une virole de centrage 57 avec le redent intérieur de guidage 54 du corps de manchon de gant 41 voir figure 6 et 9).

Un avantage principal de l'invention est la mise en place du gant qui se fait par une simple pression longitudinale de l'opérateur. Cela évite des efforts de rotation peu aisés de la part de l'opérateur, notamment comme avec les systèmes à baïonnette.

**NOMENCLATURE**

| **Repère** | **Désignation** |
|---|---|
| 2 | Paroi (de l'enceinte de confinement) |
| 4 | Rond d'épaule |
| 5 | Collier (de maintien de la manchette sur le rond d'épaule) |
| 6 | Manchette |
| 7 | Intérieur de la manchette |
| 10 | Rond de poignet : 10a montage en surpression |
| | 10b montage en dépression |
| 20 | Manchon de manchette : 20a montage en surpression |
| | 20b montage en dépression |
| 21 | Corps de manchon de manchette : 21a montage en surpression |
| | 21b montage en dépression |
| 22 | Bague d'assemblage de manchon de manchette : 22a montage ensurpression |
| | 22 b montage en dépression |
| 23 | Redent (extérieur de maintien de la manchette) |
| 24 | Gorge de l'extrémté de la manchette : montage en surpression |
| 24' | Gorge de l'extrémté de la manchette : montage en dépression |
| 25 | Gorge : montage en surpression |
| 25' | Gorge : montage en dépression |
| 26 | Virole d'interchangeabilité |
| 27 | Alésage (de la virole garantissant la continuité de l'étanchéité lors du changement de gant) |
| 28 | Alésage de dégagement (de protection du joint d'étanchéité) |
| 29 | Entrée (d'engagement des plots dans les rampes axiales) |
| 30 | Rampes axiales |
| 31 | Ergot antiretour |
| 32 | Alésage intérieur (de centrage de 22 sur 21) |
| 33 | Epaulement (de maintien de 6 sur 23 par pression axiale et de protection de la manchette 6 contre les chocs) |
| 36 | Repère visuel (début et fin de verrouillage) |
| 37 | Cavité (pour plots après clipsage) |
| 38 | Repère d'engagement du manchon de gant |
| 40a, 40b | Manchon de gant : 40a pour le montage en surpression |
| | 40b pour le montage en dépression |
| 41a, 41b | Corps de manchon de gant : 41a pour le montage en surpression |
| | 41 b pour le montage en dépression |
| 42a, 42b | Bague d'assemblage (de gant) : 42a pour le montage en surpression |
| | 42 b pour le montage en dépression |
| 43 | Joint d'étanchéité |
| 44 | Gorge (pour joint d'étanchéité) |
| 47 | Tenon d'effacement des plots |
| 48 | Secteurs flexibles supportant les plots clipsables |
| 49 | Plots clipsables |
| 50 | Lumière débouchante (permettant la souplesse des secteurs flexibles) |
| 51 | Repère (visuel pour l'alignement avec le repère 36) |
| 52 | Logement (pour les tenons d'effacement) |
| 53 | Epaulement intérieur (d'appui de la peau du gant) |
| 54 | Redent intérieur de guidage et de formation d'une gorge naturelle 55 entre le corps du manchon 41 et la bague d'assemblage de gant 42 |
| 55 | Espace |
| 56 | Collerette d'appui du gant |
| 57 | Virole (de centrage sur le corps de manchon de gant 41) |
| 58 | Rainure |
| 60a, 60b | Gant : 60a pour le montage en surpression |
| | 60b pour le montage en dépression |

## Revendications

1. Dispositif bidirectionnel de changement d'un gant de manipulation de l'intérieur vers l'extérieur d'une boite à gant et de l'extérieur vers l'intérieur sous confinement, ledit dispositif étant destiné à remplacer un gant usagé (60a, 60b) par un gant neuf, comportant une manchette (6) raccordée de façon étanche à un rond d'épaule (4) monté de façon étanche sur la paroi (2) d'une enceinte de confinement (1) et raccordée de façon étanche à un manchon de manchette (20), et un gant (60a, 60b) en un matériau souple raccordé de façon étanche à un manchon de gant (40a, 40b), **caractérisé en ce que** le manchon de gant (40a, 40b) comporte extérieurement un nombre déterminé de plots clipsables (49) situés sur des secteurs flexibles (48) et **en ce que** le manchon de manchette (20), dont la surface interne est cylindrique sans obstacle, comporte intérieurement un même nombre de rampes axiales (30) pour guider les plots clipsables (49) dans des cavités (37) d'ancrage, verrouillant le manchon de gant dans le manchon de manchette, ledit manchon de gant et ledit manchon de manchette formant, une fois assemblés, un tout étanche appelé rond de poignet (10).

2. Dispositif de changement d'un gant selon la revendication 1, **caractérisé en ce qu'**une étanchéité statique et dynamique, lors de l'interchangeabilité, est constituée au minimum par un joint d'étanchéité (43) soit injecté soit encastré de façon étanche dans la gorge (44) du manchon de gant (40) prévue sur le corps (41) du manchon de gant, afin d'assurer une étanchéité permanente entre le manchon de manchette (20) et le manchon de gant (40a, 40b).

3. Dispositif de changement de gant selon la revendication 2, **caractérisé en ce que** le joint d'étanchéité (43) à lobes est en élastomère et a subi une ionisation de surface permettant augmenter ses propriétés de glissance facilitant la mise en place d'une nouvelle bague et l'éjection de l'ancienne.

4. Dispositif de changement de gant selon une revendication 1 à 3, **caractérisé en ce qu'**il comporte les plots clipsables (49) et des tenons d'effacement des plots (47) munis d'un système visuel et mécanique de détrompage, de façon à ce que le gant soit toujours mis dans la bonne position de travail.

5. Dispositif de changement de gant selon les revendications 1 à 4, **caractérisé en ce que**, pour ne pas nécessiter d'outil spécifique pour effectuer la manipulation d'interchangeabilité par l'opératrice ou par l'opérateur, des repères visuels (36) sont utilisés pour faciliter la présentation lors des actions d'interchangeabilité s'effectuant par une simple translation.

6. Dispositif de changement de gant selon une des revendications 1 à 5, **caractérisé en ce qu'**il comporte un système de verrouillage composé des plots clipsables (49) introduits dans les cavités (37) appropriés, ces plots clipsables pouvant être déclipsés, grâce à des tenons d'effacement (47), qui s'introduisent dans des logements (52) des secteurs flexibles (48) pour s'effacer vers l'intérieur du manchon de gant (40a, 40b), cette action se traduisant par le déclipsage de ces plots clipsables (49).

7. Dispositif de changement de gant selon une des revendications 1 à 6, **caractérisé en ce que** le manchon de gant (40a, 40b) est composé d'un corps (41) de manchon de gant comportant les dispositifs de guidage et de verrouillage de ce corps de manchon de gant (40a, 40b) dans le corps du manchon de manchette (21) et ce qu'il comporte une bague d'assemblage de gant (42a, 42b) du gant (60a, 60b) dans le corps du manchon du gant (40a, 40b), le maintien étant assuré par la bague d'assemblage de gant (42a, 42b) dans le corps du manchon de gant (40a, 40b).

8. Dispositif de changement de gant selon les revendications 1 à 7, **caractérisé en ce que** le manchon de manchette (20a, 20b) est composé d'un corps de manchon de manchette (21) et d'une bague d'assemblage de manchette (22) venant presser la manchette contre un redent (23) du corps de manchon de manchette (21), assurant ainsi l'étanchéité du manchon de manchette (20a, 20b), le tout étant maintenu par assemblage les rendant indissociables.

9. Procédé de remplacement d'un gant usagé par un gant neuf au moyen d'un dispositif selon l'une quelconque des revendications 5 et 8, **caractérisé en ce qu'**il comporte les étapes suivantes :
- on présente le nouveau manchon de gant (40a, 40b) sur le manchon de gant usagé en place dans le corps du manchon de manchette (21) en prenant soit d'aligner un repère visuel du nouveau manchon (40a, 40b) avec un repère visuel du corps de manchon de manchette (21),
- on pousse le nouveau manchon de gant (40a, 40b) sur l'ancien manchon de gant (40a, 40b),
- on pousse le bloc les deux manchons de gant (40a, 40b) dans le corps du manchon de manchette (21) jusqu'à un repère de fin de verrouillage situé sur le corps du manchon de manchette (21), signalé par un « clic ».

10. Procédé selon la revendication 9, appliquée à une boîte à gants en surpression, **caractérisé en ce qu'**il commence par les deux phases suivantes :
- on retrousse le gant usagé (60a) vers l'extérieur de la manchette (6), et
- on place le gant neuf (60a) équipé de son manchon (40a) à l'intérieur de l'enceinte de confinement.

11. Procédé selon la revendication 9, appliqué à une boîte à gants en surpression, **caractérisé en ce que**, à la fin du procédé, le manchon de gant usagé est dégagé dans à l'intérieur de la manchette.

12. Procédé selon la revendication 9, appliqué à une boîte à gant en dépression, **caractérisé en ce qu'**il commence par les trois phases suivantes :
- on retrousse la manchette (6) vers l'extérieur de la cellule, et
- on retrousse le gant neuf (60b) vers l'intérieur de son manchon,
- on place le gant neuf (60b) équipé de son manchon de gant (40b) à l'extérieur de l'enceinte de confinrment.

13. Procédé selon revendication 9, appliqué à une boîte à gant en dépression, **caractérisé en ce que**, à la fin du procédé, le manchon de gant usgagé est dégagé à l'intérieur de la boîte à gant.

## Patentansprüche

1. Bidirektionale Vorrichtung zum Wechseln eines Handhabungshandschuhs von der Innenseite zur Außenseite einer Handschuhbox und von der Außenseite zur Innenseite unter Einschluss, wobei die Vorrichtung dazu ausgelegt ist, einen gebrauchten Handschuh (60a, 60b) durch einen neuen Handschuh zu ersetzen, umfassend eine Manschette (6), die auf dichte Weise an einem Schulterring (4) angeschlossen ist, der auf dichte Weise an der Wand (2) eines Einschlußgehäuses (1) montiert ist, und auf dichte Weise an einen Manschettenstutzen (20) angeschlossen ist, und einen Handschuh (60a, 60b) aus einem flexiblen Material, der auf dichte Weise an einem Handschuhstutzen (40a, 40b) angeschlossen ist, **dadurch gekennzeichnet, dass** der Handschuhstutzen (40a, 40b) außen eine bestimmte Zahl von klippsbaren Stiften (49) umfasst, die an flexiblen Sektoren (48) angeordnet sind, und dass der Manschettenstutzen (20), dessen Innenoberfläche zylindrisch ohne Hindernis ist, innen eine identische Zahl von axialen Rampen (30) umfasst, um die klippsbaren Stifte (49) in Verankerungshohlräume (37) zu führen, was den Handschuhstutzen in dem Manschettenstutzen verriegelt, wobei der Handschuhstutzen und der Manschettenstutzen im zusammengebauten Zustand eine dichte Gesamtheit bilden, die als Handgelenkring (10) bezeichnet wird.

2. Vorrichtung zum Wechseln eines Handschuhs nach Anspruch 1, **dadurch gekennzeichnet, dass** eine statische und dynamische Dichtigkeit während der Austauschbarkeit wenigstens durch eine Dichtverbindung (43) gebildet wird, die auf dichte Weise in die Kehle (44) des Handschuhstutzens (40) injiziert oder eingebaut ist, die an dem Körper (41) des Handschuhstutzens vorgesehen ist, um eine permanente Dichtigkeit zwischen dem Manschettenstutzen (20) und dem Handschuhstutzen (40a, 40b) zu gewährleisten.

3. Vorrichtung zum Wechseln eines Handschuhs nach Anspruch 2, **dadurch gekennzeichnet, dass** die Dichtverbindung (43) mit Lappen aus einem Elastomer ist und einer Oberflächenionisierung unterzogen wurde, die es erlaubt, ihre Gleiteigenschaften zu erhöhen, was die Platzierung eines neuen Rings und das Auswerfen des alten erleichtert.

4. Vorrichtung zum Wechseln eines Handschuhs nach einem der Ansprüche 1 bis 3, **dadurch gekennzeichnet, dass** sie klippsbare Stifte (49) und Zapfen zum Zurückziehen der Stifte (47) umfasst, die mit einem visuellen und mechanischen Verwechslungssicherungssystem derart ausgestattet sind, dass der Handschuh stets in der richtigen Arbeitsposition angeordnet ist.

5. Vorrichtung zum Wechseln eines Handschuhs nach den Ansprüchen 1 bis 4, **dadurch gekennzeichnet, dass**, um kein spezielles Werkzeug zum Durchführen der Austauschbarkeitsmanipulation durch die Bedienerin oder durch den Bediener zu benötigen, visuelle Markierungen (36) verwendet werden, um die Präsentation während der Austauschbarkeitsaktionen zu erleichtern, die durch eine einfache Translation erfolgen.

6. Vorrichtung zum Wechseln eines Handschuhs nach einem der Ansprüche 1 bis 5, **dadurch gekennzeichnet, dass** sie ein Verriegelungssystem umfasst, das mit klippsbaren Stiften (49) gebildet ist, die in die geeigneten Hohlräume (37) eingesetzt sind, wobei diese klippsbaren Stifte abgeklippst werden können mit Hilfe von Zapfen zum Zurückziehen (47), die in Aufnahmen (52) der flexiblen Sektoren (48) einzubringen sind, um in das Innere des Handschuhstutzens (40a, 40b) zurückgezogen zu werden, wobei diese Aktion zum Abklippsen der klippbaren Stifte (49) führt.

7. Vorrichtung zum Wechseln eines Handschuhs nach einem der Ansprüche 1 bis 6, **dadurch gekennzeichnet, dass** der Handschuhstutzen (40a, 40b) mit einem Handschuhstutzenkörper (41) gebildet ist, der die Vorrichtungen zum Führen und zum Verriegeln dieses Körpers des Handschuhstutzens (40a, 40b) in dem Körper des Manschettenstutzens (21) umfasst, und dass er einen Handschuhzusammenbauring (42a, 42b) des Handschuhs (60a, 60b) in dem Handschuhstutzenkörper (40a, 40b) umfasst, wobei der Halt durch den Handschuhzusammenbauring (42a, 42b) in dem Handschuhstutzenkörper (40a, 40b) gewährleistet wird.

8. Vorrichtung zum Wechseln eines Handschuhs nach den Ansprüchen 1 bis 7, **dadurch gekennzeichnet, dass** der Manschettenstutzen (20a, 20b) mit einem Manschettenstutzenkörper (21) und einem Manschettenzusammenbauring (22) gebildet ist, der die Manschette gegen eine Stufe (23) des Manschettenstutzenkörpers (21) drückt, was somit die Dichtigkeit des Manschettenstutzens (20a, 20b) gewährleistet, wobei die Gesamtanordnung durch einen Zusammenbau gehalten wird, der sie untrennbar macht.

9. Verfahren zum Ersetzen eines gebrauchten Handschuhs durch einen neuen Handschuh mit Hilfe einer Vorrichtung nach einem der Ansprüche 5 und 8, **dadurch gekennzeichnet, dass** es die folgenden Schritte umfasst:
- man präsentiert den neuen Handschuhstutzen (40a, 40b) an dem gebrauchten Handschuhstutzen am Platz in dem Manschettenstutzenkörper (21), wobei man eine visuelle Markierung des neuen Stutzens (40a, 40b) mit einer visuellen Markierung des Manschettenstutzenkörpers (21) ausrichtet,
- man drückt den neuen Handschuhstutzen (40a, 40b) auf den alten Handschuhstutzen (40a, 40b),
- man drückt den Block aus zwei Handschuhstutzen (40a, 40b) in den Manschettenstutzenkörper (21) bis zu einer Verriegelungsendmarkierung, die auf dem Manschettenstutzenkörper (21) gelegen ist, signalisiert durch ein "klick".

10. Verfahren nach Anspruch 9, das bei einer Handschuhbox mit Überdruck angewandt wird, **dadurch gekennzeichnet, dass** es mit den zwei folgenden Phasen beginnt:
- man krempelt den gebrauchten Handschuh (60a) zur Außenseite der Manschette (6) hin um, und
- man platziert den mit seinem Stutzen (40a) ausgestatteten neuen Handschuh (60a) im Inneren des Einschlussgehäuses.

11. Verfahren nach Anspruch 9, das bei einer Handschuhbox mit Überdruck angewandt wird, **dadurch gekennzeichnet, dass** der gebrauchte Handschuhstutzen am Ende des Verfahrens im Inneren der Manschette losgelassen wird.

12. Verfahren nach Anspruch 9, das bei einer Handschuhbox mit Unterdruck angewandt wird, **dadurch gekennzeichnet, dass** es mit den folgenden drei Phasen beginnt:
- man krempelt die Manschette (6) zur Außenseite der Zelle hin um, und
- man krempelt den neuen Handschuh (60b) zur Innenseite seines Stutzens hin um,
- man platziert den mit seinem Handschuhstutzen (40b) ausgestatteten neuen Handschuh (60b) an der Außenseite des Einschlussgehäuses.

13. Verfahren nach Anspruch 9, das bei einer Handschuhbox mit Unterdruck angewandt wird, **dadurch gekennzeichnet, dass** der gebrauchte Handschuhstutzen am Ende des Verfahrens im Inneren der Handschuhbox losgelassen wird.

## Claims

1. Two-directional device to replace a handling glove from the inside to the outside of a glove box and from the outside to the inside under confinement, said device being designed to replace a used glove (60a, 60b) by a new glove comprising a cuff (6) connected in a sealed manner to a shoulder port (4) mounted in a sealed manner on the wall (2) of a confinement containment (1) and connected in a sealed manner to a cuff sleeve (20), and a glove (60a, 60b) made of a flexible material connected in a sealed manner to a glove sleeve (40a, 40b), **characterised in that** the outside of the glove sleeve (40a, 40b) comprises a determined number of snap-fitting studs (49) located on flexible sectors (48), and **in that** the cuff sleeve (20) that has a cylindrical internal surface without any obstacles, comprises the same number of axial ramps (30) on the inside to guide the snap-fitting studs (49) into the anchor cavities (37), locking the glove sleeve in the cuff sleeve, said glove sleeve and said cuff sleeve forming a fully sealed assembly called a cuff port (10) once assembled.

2. Glove replacement device according to claim 1, **characterised in that** a static and dynamic seal during the replacement is composed of at least one seal (43), either injected or embedded in a sealed manner in the groove (44) of the glove sleeve (40) provided on the glove sleeve body (41) to give a permanent seal between the cuff sleeve (20) and the glove sleeve (40a, 40b).

3. Glove replacement device according to claim 2, **characterised in that** the lobe seal (43) is made of elastomer on which surface ionisation has been done to improve its slip properties, facilitating placement of a new ring and ejection of the old ring.

4. Glove replacement device according to one of claims 1 to 3, **characterised in that** it comprises snap-fitting studs (49) and stud retraction pins (47) provided with a visual and mechanical foolproofing system, such that the glove will always be put in the right working position.

5. Glove replacement device according to one of claims 1 to 4, **characterised in that** visual marks (36) are used to facilitate positioning during interchangeability actions consisting of a simple translation, so that no special tools are necessary for the interchangeability manipulation made by the operator.

6. Glove replacement device according to one of claims 1 to 5, **characterised in that** it comprises a locking system composed of snap-fitting studs (49) inserted in appropriate cavities, these snap-fitting studs can be unclipped by retraction pins (47) that enter housings (52) of the flexible sectors (48) to retract towards the inside of the glove sleeve (40a, 40b), this action resulting in unclipping of these snap-fitting studs (49).

7. Glove replacement device according to one of claims 1 to 6, **characterised in that** the glove sleeve (40a, 40b) is composed of a glove sleeve body (41) comprising devices for guidance and locking of this glove sleeve body (40a, 40b) in the cuff sleeve body (21) and **in that** it comprises a glove assembly ring (42a, 42b) of the glove (60a, 60b) in the glove sleeve body (40a, 40b), retention being obtained by the glove assembly ring (42a, 42b) in the glove sleeve body (40a, 40b).

8. Glove replacement device according to one of claims 1 to 7, **characterised in that** the cuff sleeve (20a, 20b) is composed of a cuff sleeve body (21) and a cuff assembly ring (22) that pushes the cuff into contact with a stop (23) of the cuff sleeve body (21), thus providing the seal of the cuff sleeve (20a, 20b), the complete assembly being retained by assembling the parts making them indissociable.

9. Method of replacing a used glove by a new glove using a device according to any one of claims 5 and 8, **characterised in that** it includes the following steps:
- the new glove sleeve (40a, 40b) is placed on the used glove sleeve in position in the cuff sleeve body (21) taking care to align a visual mark (51) of the new sleeve (40a, 40b) with a visual mark of the cuff sleeve body (21),
- the new glove sleeve (40a, 40b) is pushed onto the old glove sleeve (40a, 40b),
- the two glove sleeves (40a, 40b) are pushed in a single piece into the cuff sleeve body (21), to a mark of the end of locking located on the cuff sleeve body (21), signalled by a "click".

10. Method according to claim 9, applied to a glove box in positive pressure, **characterised in that** it begins with the following two phases:
- the used glove (60a) is rolled up towards the outside of the cuff (6), and
- the new glove (60a) fitted with its sleeve (40a) is placed inside the confinement containment.

11. Method according to claim 9, applied to a glove box in positive pressure, **characterised in that** at the end of the process, the used glove sleeve is pushed clear into the inside of the cuff.

12. Method according to claim 9, applied to a glove box in negative pressure, **characterised in that** it begins with the following three phases:
- the cuff (6) is rolled up towards the outside of the cell, and
- the new glove (60b) is rolled up towards the inside of its own sleeve,
- the new glove (60b) fitted with its glove sleeve (40b) is placed outside the confinement containment.

13. Method according to claim 9, applied to a glove box in negative pressure, **characterised in that** at the end of the process, the used glove sleeve is pushed clear into the inside of the glove box.
